Europäisches Patentamt

European Patent Office

Office européen des brevets

Publication number: **0 287 801**
**A2**

# EUROPEAN PATENT APPLICATION

Application number: **88103961.4**

Int. Cl.4: **F16H 41/04**

Date of filing: **12.03.88**

Priority: **23.04.87 CA 535334**

Date of publication of application:
**26.10.88 Bulletin 88/43**

Designated Contracting States:
**DE FR IT**

Applicant: **Haslinger, Wolfgang**
**30-20 Heney Street**
**Ottawa Ontario(CA)**

Inventor: **Haslinger, Wolfgang**
**30-20 Heney Street**
**Ottawa Ontario(CA)**

Representative: **Schieschke, Klaus, Dipl.-Ing.**
**et al**
**Patentanwälte Dipl.-Ing. E. Eder Dipl.-Ing. K.**
**Schieschke Elisabethstrasse 34**
**D-8000 München 40(DE)**

## Hydraulic turbine system.

An axle driving system wherein pressurized oil,
supplied through a hydraulic pump, transfers the
power of the engine's flywheel to two independent
turbines through a series of hoses and selector
valve. The turbine housing has two access channels
through which the pressurized oil will surge to the
turbines. The use of the upper access channel,
which includes a channel divider, will cause the
turbines to rotate in the forward direction, while the
lower channel allows the rotation in the
opposite/reverse direction. Each turbine is connected
to a set of planetary gears which in turn are con-
nected to the axles thus rotating the wheels.

Fig. 1.

EP 0 287 801 A2

## Hydraulic Turbine System

In the conventional car, the power is transferred from the engine's rotating flywheel to the drive wheels through the clutch (in standards) or torque converter (in automatics) to the transmission drive shaft, differential and then to the wheels.

The changing of gears is often noisy and jerky. In the standard transmission, the clutch is responsible for permitting gradual application of the engine power to move the car; it enables the driver to disengage the engine from the drive-line so that the gears may be manually shifted from one gear to another. In the automatic transmission the gears are changed with the use of the torque converter usually causing a jerking sensation with a hesitation before it actually changes. We are also faced with costly transmission and differential repairs as a result of the direct drive.

I have found that these disadvantages will be overcome by providing a high pressure pump to produce sufficient volume and pressure of oil to run two independent turbines each of which will rotate sets of planetary gears which will in turn rotate the axles.

The constant play which is ever present between the input and output shafts of the transmission and between the differential and axles in the conventional motor vehicle will be entirely eliminated with the end result of fewer parts to wear and break. This system will also assist in braking by putting the selector in the opposite drive without damage.

In the drawings:

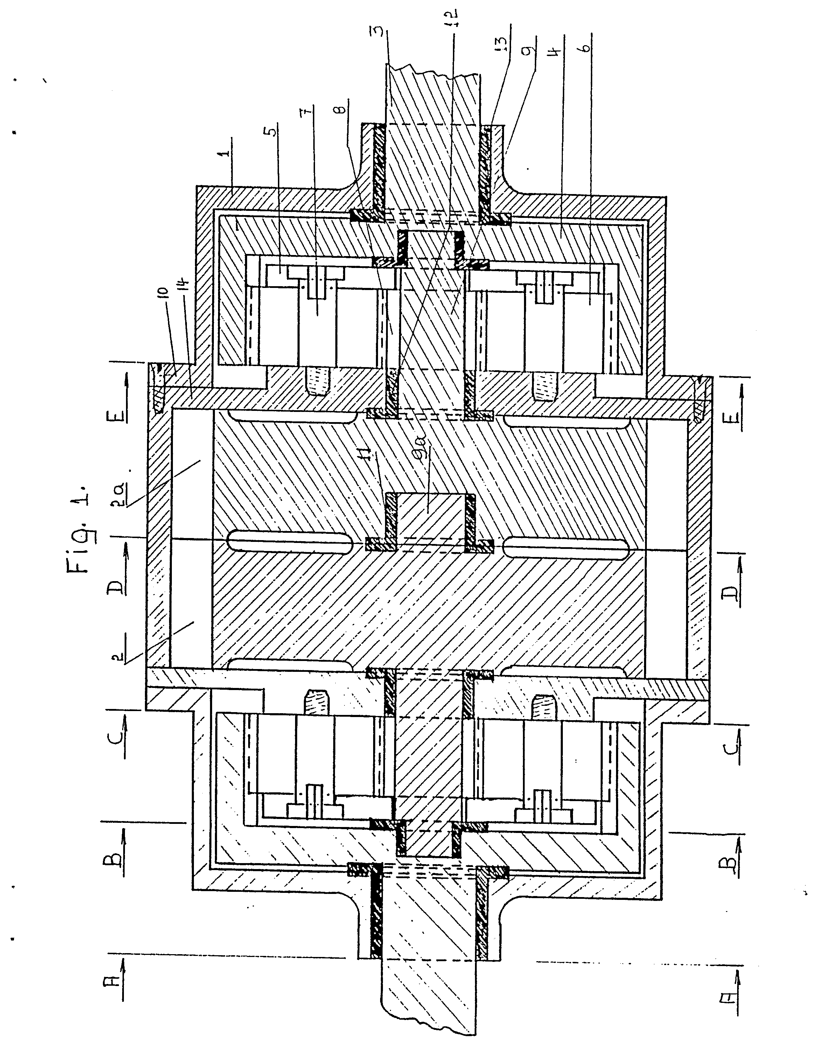

Fig. 1 is a cross section of the turbines and planetary gears

Fig. 2 A-A is a side view of the turbine assembly of Fig. 1

Fig. 3 B-B is a cross section of the planetary gears of Fig. 1

Fig. 4 C-C is a cross section of the planetary gear housing facing the turbine housing of Fig. 1

Fig. 5 D-D is a cross section of the turbines of Fig. 1

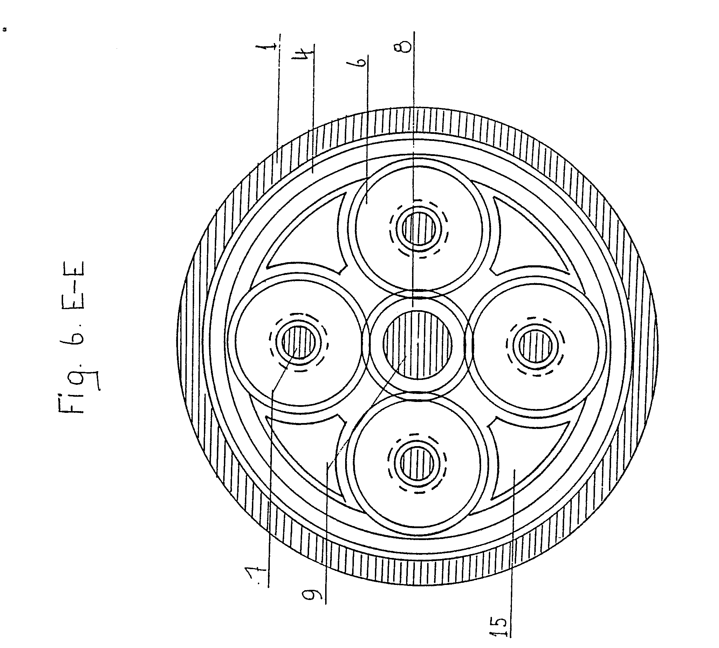

Fig. 6 E-E is a cross section of the planetary gear housing after the turbine of Fig.1

Fig. 7 is the general layout of the system

Fig. 8 is a cross section of the second embodiment of the turbine in Fig. 1

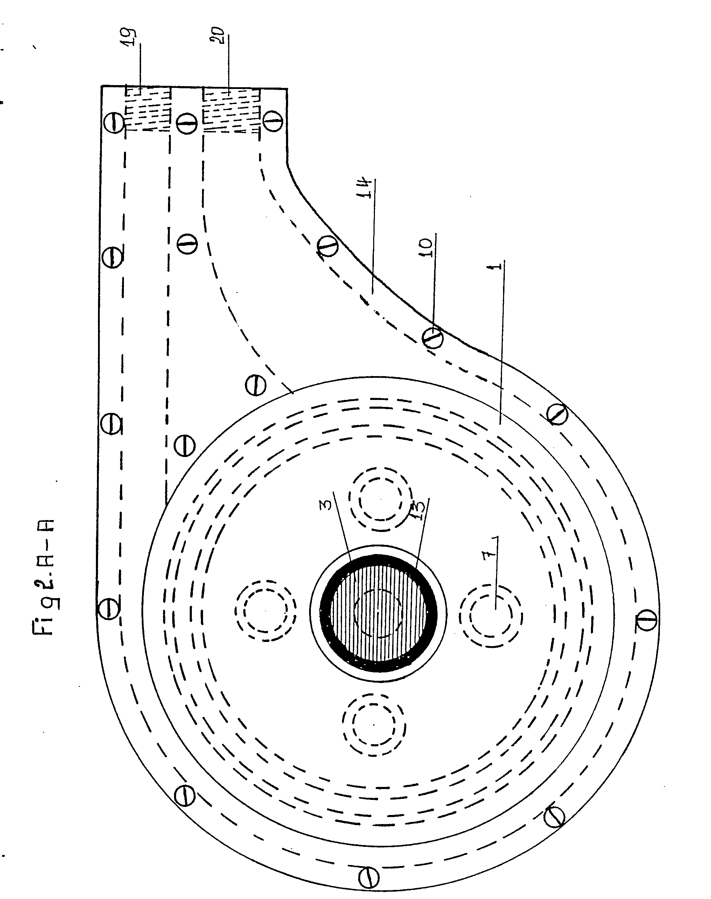

In Fig. 1 and Fig. 2 A-A, the planetary gear housing 1 houses the planetary gears. The axle 3 goes to the wheels and is splined into the internal ring gear 4. The planetary gear shaft 7 is threaded into the turbine housing 14. The axle 3 is fitted into a bearing, bushing or spacer 13 which is fitted in the gear housing 1. The turbine housing 14 houses the two indepedent turbines.

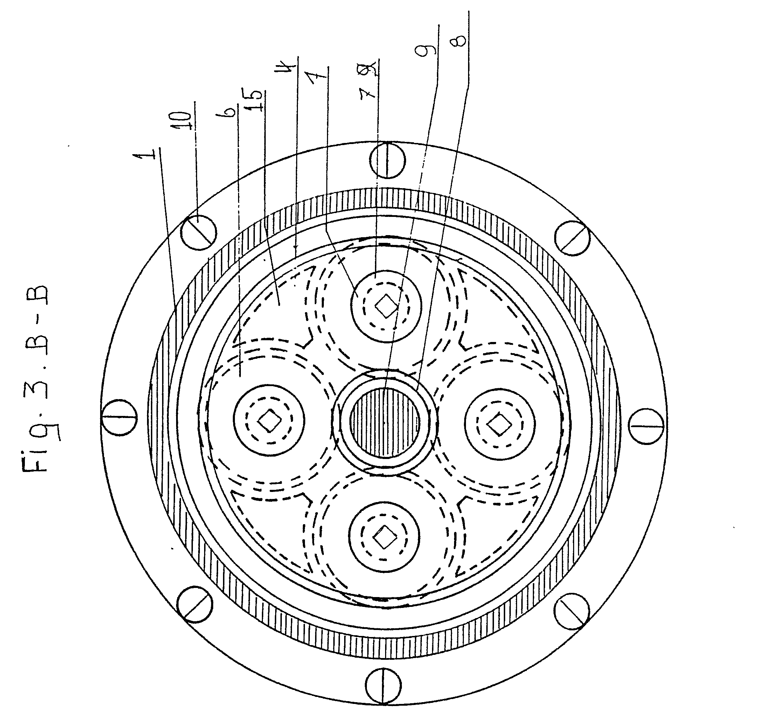

In Fig. 3 B-B, the planetary gear housing 1 houses the planetary gears 6 consisting of the internal ring gear 4 and the sun gear 8. The diagram shows the top plate of the planet carrier 5, the planetary gear shafts 7, and the turbine shaft 9.

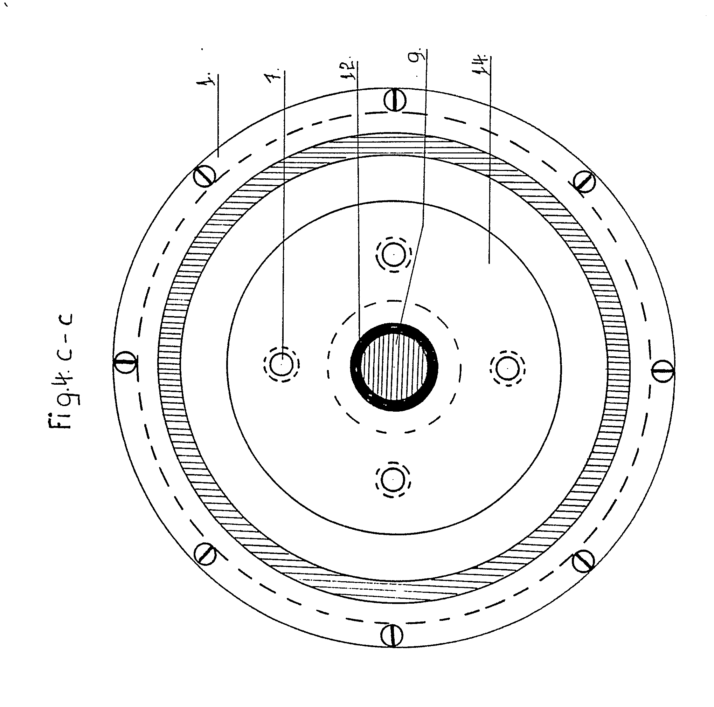

In Fig. 4 C-C, the base plate of the planetary gear housing is also the turbine housing cover screwed together and the turbine shaft 9 passes through the fitted bushing, bearing 12.

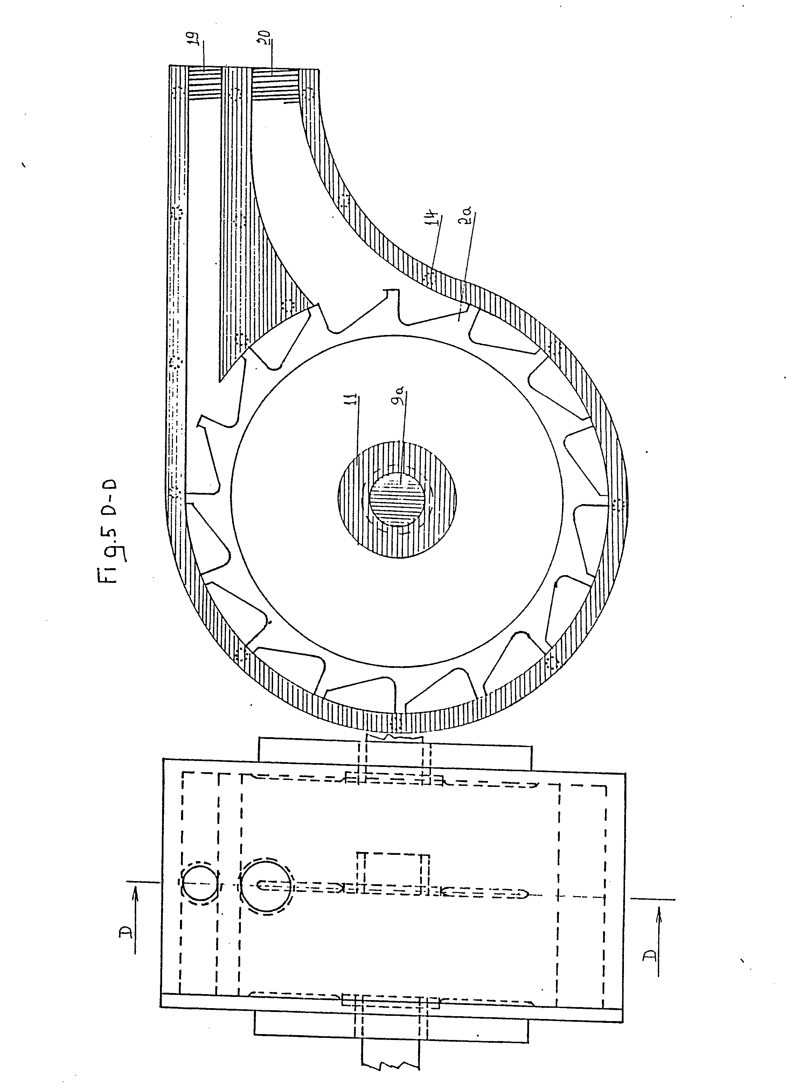

In Fig. 5 D-D, the turbines 2 and 2a are each fitted into bearings/bushings at the turbine housing 14; the turbine shaft 9 is splined into the sun gear 8 and fitted into another bushing in the centre of the internal ring gear 4.

One turbine (male) 2 is fitted into the centre bearing 11 of the other turbine (female) 2a. The bearings are fitted in such a way as to balance the turbines 2 and 2a within the planetary gears to reduce excess play.

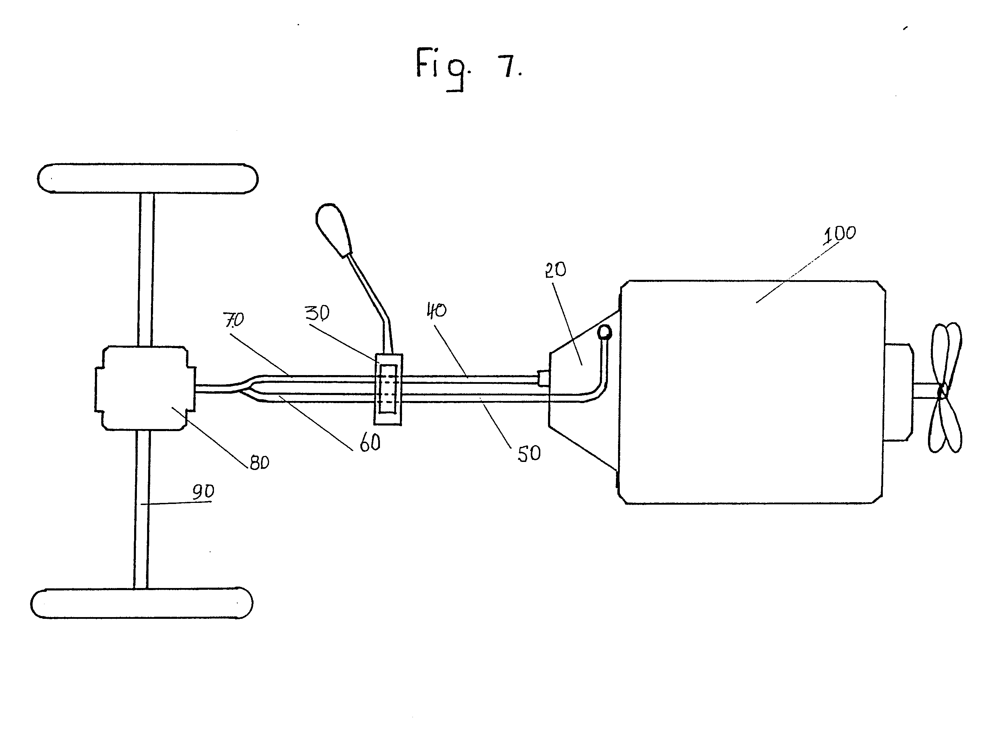

In Fig. 7 the engine 100 powers a rotating hydraulic pump 20 which pushes pressurized oil to the turbines by way of a high pressure hose 40 to a selector valve 30. When the selector valve is set in the forward drive position, the pressurized oil continues on through the high pressure flexible hose 70 to the turbines 2 and 2a which turn the planetary gears. The flexible high pressure hose 60 now serves as a return hose and by way of this hose the oil passes through the selector valve 30 and continues through the return hose 50 back to the hydraulic pump.

When the selector valve 30 is set for reverse, the pressurized oil goes through the flexible high pressure hose 60 to the turbines which rotates the planetary gears and the power travels out on the output shafts; the pressurized oil continues out of the turbines 2 and 2a through the flexible high pressure hose 70 which while in reverse becomes a return hose, to the selector valve 30 and continues back through the return hose 50 to the hydraulic pump.

The turbine housing 14 supporting the turbines for rotation provides an upper channel 19 and a lower channel 20 to allow the pressurized oil to surge into the turbines to rotate the said turbine in either direction as desired;

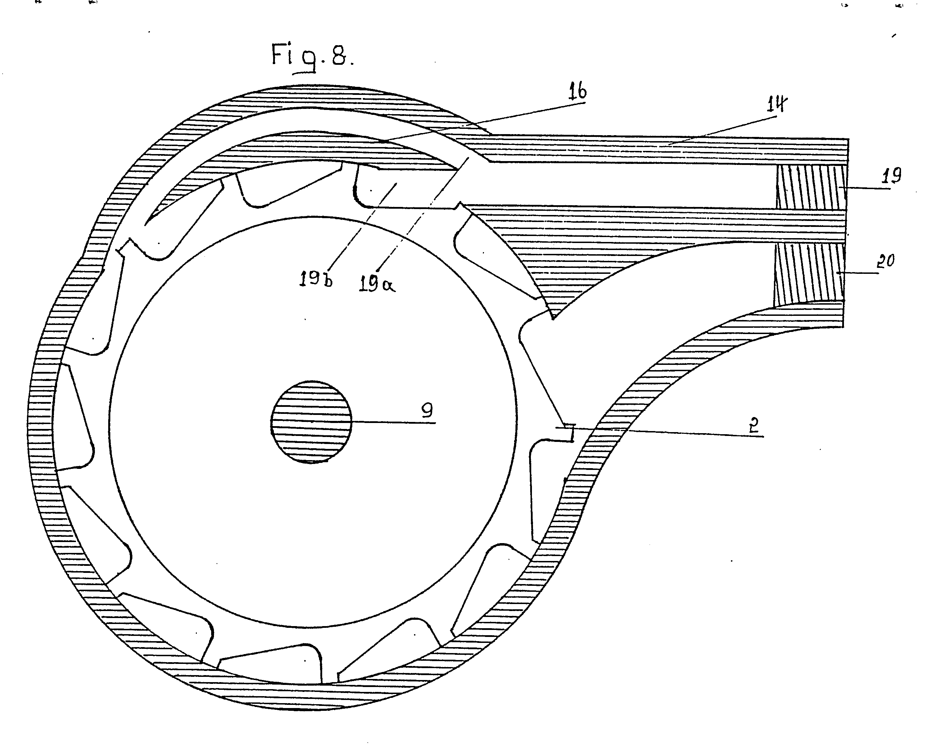

Fig. 8 is a second embodiment of the turbine in Fig. 1 showing a channel divider 16 dividing the channel in two passages 19a and 19b the lower of the two passages 19b leads directly to the turbine blades and the other 19a continues over and beyond the lower passage without hesitation to the turbine blades. In the lower passage 19b the oil can strike the turbine directly on the curve of the blade causing an immediate surge forward but depending on the position of the blade, it can have a backward surge and at this point the upper passage 19a with its continuous even flow will compensate for the top dead centre.

## Claims

1. An axle driving system for a vehicle with power supplied by pressurized oil to rotate the vehicle driving wheels comprising in combination:
- two independent hydraulic turbines which are inter-engaged at their centres;
- the said turbines rotate in either direction and rotating power is transferred to turbine shafts, one from each turbine;
- the turbine shafts engage reduction gear sets on the wheel side of the turbines and the power is then transferred from the gear sets to output axle shafts;
- a turbine housing supporting the turbines for rotation provides an upper channel and a lower channel to allow the pressurized oil to surge into the turbines to rotate the said turbines in either direction as desired;
- a selector valve adapted to direct the pressurized oil into either the upper channel or the lower channel;
- the said channels each have a distinct function; the selection of the lower channel causes the turbines to rotate in a clockwise/forward direction thus achieving the reverse direction; the selection of the upper channel rotates the turbines in a counterclockwise direction.

2. An axle driving system as set forth in claim 1 wherein the reduction gear sets are planetary gears.

3. An axle driving system as set forth in claim 2 wherein the axle shafts are an extension of the related ring gears of the planetary gear sets.

4. An axle driving system as set forth in claims 2 or 3 wherein the turbine shafts are splined to the sun gears of the related planetary reduction gears.

5. An axle driving system as set forth in claim 1 in which the pressurized oil enters the turbine housing by way of the upper channel, a channel divider divides this upper channel in two passages; the lower of the two passages leads directly to the turbine blades and the other continues over and beyond the lower passage without hesitation or deadspot to the turbine blades, in the lower passage the oil can strike the turbine directly on the curve of the blade causing an immediate forward surge but depending on the position of the blade, it can have a backward surge and at this point the upper passage having a continuous even flow will compensate for the top dead centre.

Fig. 1.

Fig 2. A−A

19

20

3

13

14

10

7

1

0 287 801

# Fig. 3. B - B

1
10
6
15
4
1
7 8
9
8

0 287 801

Fig. 4. c-c

1.

7.

12.

9.

14.

0 287 801

Fig.5 D-D

D

D

11

9a

19

20

14

2a

0 287 801

Fig. 6. E-E

0 287 801

# Fig. 7.

0 287 801

Fig. 8.

0 287 801